# EUROPÄISCHE PATENTSCHRIFT

(11) **EP 1 940 567 B1**
(45) Veröffentlichungstag und Bekanntmachung des Hinweises auf die Patenterteilung: **21.07.2010**
(21) Anmeldenummer: 06792277.3
(22) Anmeldetag: 26.09.2006
(51) Int. Cl.: B21B 35/14, B21B 31/18, F16C 3/03

(54) **WALZGERÜST MIT VERSCHIEBEVORRICHTUNG**
ROLL STAND PROVIDED WITH A DISPLACEMENT DEVICE
CAGE DE LAMINOIR DOTEE D'UN DISPOSITIF DE DEPLACEMENT

(30) Priorität: 03.10.2005 AT 16152005
(43) Veröffentlichungstag der Anmeldung: 09.07.2008
(73) Patentinhaber: Voest-Alpine Industrieanlagenbau GmbH & Co, 4031 Linz (AT)
(72) Erfinder: LANGEDER, Rudolf, A-4310 Mauthausen (AT)
(74) Vertreter: Maier, Daniel Oliver
(86) Internationale Anmeldenummer: PCT/EP2006/009333
(87) Internationale Veröffentlichungsnummer: WO 2007/039187

(56) Entgegenhaltungen:
- WO-A-03/059545
- DE-A1- 3 907 608
- DE-C- 712 855
- JP-A- 3 210 910
- JP-A- 59 229 211
- US-A- 3 818 743
- US-A- 3 857 268

## Beschreibung

Die Erfindung betrifft ein Walzgerüst mit zumindest einem, in einem Gerüstständer gelagerten, Walzenpaar und Antriebswellen, insbesondere Gelenkwellen, zum Drehantrieb der Walzen, und einer Kupplung zur Kopplung der Antriebswellen mit den Walzen. Weiters betrifft die Erfindung ein Verfahren zum axialen Verschieben von zumindest einer Walze eines über Antriebswellen drehangetriebenen Walzenpaares, welche mittels Einbaustücken in einem Gerüstständer gelagert sind, wobei die axiale Verschiebung der Walze zusammen mit den Einbaustücken erfolgt.

Aus dem Stand der Technik ist eine Vielzahl von axialen Walzenverschiebevorrichtungen bekannt. Zur Beeinflussung des Querschnittes des Walzgutes, auch als Walzgutprofil bezeichnet, ist es bekannt, die Walzen in axialer Richtung zu verschieben und dabei über die Form der Walzen bzw. dessen Verformungsverhalten das Walzgutprofil gezielt zu beeinflussen. Dabei ist es nötig auch drehangetriebene Walzen zu verschieben. Weiters bietet die Verschiebung eine Möglichkeit den Verschleiß der Walzen gezielt zu beeinflussen.

Aus der DE 3907608 A1 ist z.B. eine Antriebspindel zu entnehmen, die den Antrieb einer axial verlagerbaren Walze ermöglicht und die Walzenposition ausgleichen kann.

Nachteilig ist dabei jedoch, dass zusätzliche und aufwändige WalzenVerschiebevorrichtungen nach wie vor nötig sind. Oftmals kommen dafür ständerfixierte Verschiebevorrichtungen zum Einsatz.

Aus der US-A-3 818 743 ist eine axiale Verschiebevorrichtung für eine Walze zu entnehmen, welche außerhalb eines Getriebes für den Walzenantrieb platziert ist. Nachteilig an dieser Ausführung ist jedoch, dass keine kompakte Einbindung der Verschiebevorrichtung in den Antriebsstrang möglich ist. Auch bei anderen bekannten Ausführungsformen von Antriebswellen zur axialen Verschiebung von Walzen, wie beispielsweise US-A-3857268, JP-A-59229211, DE-C-712855, ist die Betätigungsvorrichtung nicht in die Antriebswelle integriert.

Ausgehend vom Stand der Technik ist es eine Aufgabe der Erfindung eine wesentlich einfachere und kompaktere Vorrichtung und ein Verfahren zu schaffen, die eine sichere axiale Verschiebung einer drehangetriebenen Walze ermöglichen.

Die erfindungsgemäße Aufgabe wird durch ein Walzgerüst mit den Merkmalen des Anspruchs eins gelöst.

Das Walzgerüst sieht wenigstens eine Antriebswelle vor, die einerseits eine axiale Verlagerung einer der Walzen des Walzenpaares ermöglicht, zusätzlich jedoch die Funktion eines Aktuators hat, also die axiale Verlagerung bewirkt. Mittels einer Betätigungseinrichtung, die Teil der Antriebswelle ist, kann die axiale Verschiebung, unter Änderung der axialen Länge der Antriebswelle über die Kupplung und den Walzenzapfen auf die Walze übertragen werden. Die Betätigungseinrichtung ist eine Kolben-Zylinder-Einheit. Diese ermöglicht bei sehr kompakten Abmessungen hohe axiale Stellkräfte, sodass der Einsatz auch unter engen Platzverhältnissen möglich ist. Die Betätigung der Kolben-Zylinder-Einheit führt damit zu einer axialen Verschiebung der Walze und zur einfachen axialen Positionierung zumindest einer Walze. Zusätzliche, zumeist ständerfeste oder am Ständer angelenkte Verschiebevorrichtungen können damit vollkommen entfallen. Aufgrund des Wegfalls der Verschiebevorrichtungen, die üblicherweise an der Bedienseite eines Walzgerüstes angeordnet werden, kann auch eine Walzenwechselvorrichtung kompakter ausgeführt werden, da die Länge der Verschiebevorrichtung den Walzenwechselweg zusätzlich um diese Länge erhöht. Darüber hinaus ist die Zugänglichkeit zu den Gerüsteinbauten durch den Wegfall der standerfesten Verschiebevorrichtung deutlich besser. Somit kann ein insgesamt deutlich kompakteres Walzgerüst ausgeführt werden. Als Antriebswellen können in vorteilhafter Weise Standardgelenkwellen eingesetzt werden, die durch Vorsehen einer Kolben-Zylinder-Einheit erfindungsgemäß modifiziert werden.

Das erfindungsgemäße Walzgerüst sieht vor, dass die Kolben-Zylinder-Einheit in einer Ausnehmung in der Antriebswelle integriert ist, wobei die Achsen der Kolben-Zylinder-Einheit und der Antriebswelle zusammenfallen. Der Einbau in eine Ausnehmung stellt eine sehr kompakte und Platz sparende Konstruktion dar, wobei ein größtmöglicher Schutz für die Kolben-Zylinder-Einheit gegeben ist. Aufgrund der Montage kommt es auch zu keinerlei Unwuchten, die zu Vibrationen führen könnten. Als Antriebswellen können erfindungsgemäß modifizierte Standardausführungen eingesetzt werden, sodass auf geprüfte Mechanikkomponenten zurückgegriffen werden kann.

Eine Kupplung ermöglicht die lösbare Verbindung der Walze mit einer Antriebswelle, wobei neben der drehstarren Verbindung auch axiale Kräfte aufgenommen werden müssen. Durch die Kupplung ist in einfacher Weise eine Entkopplung der Antriebswellen von den Walzen möglich, sodass beispielsweise rasch ein Walzenwechsel vorgenommen werden kann.

Entsprechend einer vorteilhaften Ausgestaltung des erfindungsgemäßen Walzgerüstes weist die Antriebswelle motorseitig einen in axialer Richtung ortsfesten Wellenteil und gerüstseitig einen in axialer Richtung verschieblichen Wellenteil auf. Durch die Zweiteilung der Antriebswelle kann die axiale Lageveränderung durch die Antriebswelle selbst aufgebracht und ausgeglichen werden. Der ortsfeste motorseitige Wellenteil kann dabei konventionell ausgeführt werden. Im Falle einer Gelenkspindel trägt der ortsfeste Wellenteil ein Wellengelenk. Der bewegliche Wellenteil trägt ebenfalls ein Wellengelenk und eine Kupplung zur Kopplung des beweglichen Wellenteils mit der Walze über dessen Walzenzapfen.

Nach einer weiteren vorteilhaften Ausgestaltung des erfindungsgemäßen Walzgerüstes ist die Kolben-Zylinder-Einheit zylinderseitig fest mit dem Gelenkkopf des verschieblichen Wellenteils verbunden. Durch diese konstruktive Ausgestaltung wird die Kolben-Zylinder-Einheit stabil und formschlüssig mit dem beweglichen Wellenteil verbunden.

Nach einer weiteren vorteilhaften Ausgestaltung des erfindungsgemäßen Walzgerüstes ist die Kolben-Zylinder-Einheit kolbenseitig über die Kolbenstange gelenkig über ein Verbindungsgelenk mit dem Gelenkkopf des ortsfesten Wellenteils verbunden. Durch diese Maßnahme können Verkantungen bzw. leichte Schiefstellungen, die im Betrieb nicht ausgeschlossen werden können vermieden, Dichtungen geschont und so eine hohe Lebensdauer der Kolben-Zylinder-Einheit und eine entsprechend lange Wartungszeit für die Antriebswelle erreicht werden.

Gemäß einer speziellen Ausgestaltung des erfindungsgemäßen Walzgerüstes ist zur radialen Führung der Kolbenstange der Kolben-Zylinder-Einheit eine Führungsscheibe vorgesehen ist, welche mit der Kolbenstange und dem Verbindungsgelenk fest verbindbar ist. Durch die radiale Führung können Überlasten durch Querkräfte auf die Kolbenstange und den Zylinder auch bei Stößen oder kurzzeitigen Lastspitzen wirksam verhindert werden und so Schäden an der Kolben-Zylinder-Einheit bzw. dem Verbindungsgelenk vermieden werden.

Eine besondere Ausführungsform des erfindungsgemäßen Walzgerüstes sieht vor, dass die beiden Teile der Antriebswelle in axialer Richtung teleskopartig ineinander greifen, wobei Änderungen der axialen Länge der Antriebswelle ausgeglichen werden können. Die gesamte Längenänderung wird dabei durch sich teleskopartig überlappende Wellenteile erzielt, sodass ein sehr kompakter Antrieb bzw. Walzgerüst erreicht wird. Durch die Teleskopausführung können zudem weitgehend Standardbauteile eingesetzt werden.

Nach einer alternativen Ausgestaltung des erfindungsgemäßen Walzgerüstes weist der bewegliche Wellenteil eine außen liegende Drehdurchführung zur hydraulischen Versorgung der Kolben-Zylinder-Einheit auf. Durch diese Versorgung wird eine einfache konstruktive Lösung verwirklicht, wobei eine sichere Versorgung der räumlich beweglichen Kolben-Zylinder-Einheit auch unter rauem Walzwerksbetrieb sichergestellt werden kann.

Nach einer möglichen Ausgestaltung des erfindungsgemäßen Walzgerüstes ist ein außen liegendes Wegmesssystem, zur Erfassung der axialen Position des verschieblichen Wellenteils, an der Antriebswelle vorgesehen, wobei dieses zwischen einer Schutzabdeckung und einer mitfahrenden Nase zur Drehmomentenabstützung für die Drehdurchführung angeordnet ist. Durch diese Maßnahmen kann auch unter Walzwerksbedingungen eine sichere und störungsfreie Messeinrichtung gewährleistet werden. Die Schutzabdeckung ist in einer Tragekonstruktion gelagert.

Gemäß einer vorteilhaften Ausgestaltung des erfindungsgemäßen Walzgerüstes weist die Walze einen Walzenzapfen auf, der zwei in einer Hülse geführte und federbelastete Druckstücke, zur formschlüssigen Kopplung des Walzenzapfens mit der Kupplung umfasst. Durch die Anordnung der Druckstücke im Walzenzapfen wird eine sehr robuste Koppeleinrichtung geschaffen, wobei die Kupplung selbst noch einfacher aufgebaut werden kann und ohne jegliche Medienversorgung auskommt. Die Kupplung zeichnet sich durch hohe Standzeiten bei geringem Wartungsaufwand aus.

Eine besondere Ausführung des erfindungsgemäßen Walzgerüstes sieht vor, dass die Walze mittels der federbelasteten und in Ausnehmungen der Kupplung selbsttätig einrastenden Druckstücken mit dem axial verschieblichen Wellenteil koppelbar ist. Damit kann ein sicherer, rascher und einfacher Koppelvorgang sichergestellt werden, sodass geringe Walzenwechselzeiten realisierbar sind.

Gemäß einer weiteren vorteilhaften Ausgestaltung des erfindungsgemäßen Walzgerüstes ist zumindest eine seitlich anstellbare Spindelkopfhalterung mit Halteelementen zur Lagefixierung der Antriebswelle vorgesehen, wobei die Spindelkopfhalterung zwei Betätigungseinrichtungen zum Verschieben der Druckstücke zum Lösen der Verbindung zwischen Walze und axial verschieblichem Wellenteil aufweist. Beim Lösen der Verbindung zwischen Walze und Kupplung, ist es nötig, die Antriebswelle in Position zu halten. Dazu werden seitlich einfahrbare Spindelkopfhalterungen eingesetzt. Die Anstellung dieser Spindelkopfhalterung kann hydraulisch betätigt erfolgen. Zumeist wird die Antriebswelle zwischen zwei Aufnahmeelementen der Spindelkopfhalterung geklemmt. Neben dieser Funktion übernimmt die Spindelkopfhalterung auch die Entriegelung der Walze von der Antriebswelle bzw. der dafür vorgesehenen Kupplung. Die Walze kann durch Betätigung der Druckstücke mittels pneumatischer oder alternativ auch hydraulischer Zylinder als Betätigungseinrichtungen von der Antriebswelle entkoppelt werden.

Eine alternative Ausgestaltung des erfindungsgemäßen Walzgerüstes sieht in der Kupplung radial angeordnete Entriegelungskolben, zur Übertragung der Kraft der Betätigungseinrichtungen auf die Druckstücke vor. Durch diese Entriegelungskolben kann eine Betätigungseinrichtung ein Druckstück zur Entriegelung verschieben, wobei kein tiefes Eindringen in die Kupplung erforderlich ist und ein geringer Hub zur Entriegelung ausreicht.

Nach einer möglichen Ausführung des erfindungsgemäßen Walzgerüstes ist das angetriebene Walzenpaar durch Arbeitswalzen eines Quarto-Gerüstes gebildet. Bei Quarto-Gerüsten ist es möglich, durch axiale Verstellung der Arbeitswalzen den Walzspalt und damit das Walzgutprofil gezielt einzustellen. Durch das erfindungsgemäße Gerüst gelingt eine besonders vorteilhafte Arbeitswalzenverstellung, da jegliche ständerfeste Verschiebevorrichtungen wegfallen können. Dadurch entsteht ein sehr Platz sparendes Gerüst bzw. Gerüstantrieb.

Eine spezielle Ausgestaltung des erfindungsgemäßen Walzgerüstes sieht vor, dass die Walzen mittels Einbaustücken im Gerüstständer gelagert sind und dass diese gemeinsam mit der Walze axial verschiebbar sind. Durch den Wegfall einer am Gerüstständer fixierten Verschiebeeinrichtung können einfachere Einbaustücke ausgeführt werden, wobei diese mit den Walzen verschoben werden können. Aufwändige Kopplungseinrichtungen mit einer Walzenverschiebeeinrichtung können vollkommen entfallen.

Nach einer weiteren möglichen Ausführung des erfindungsgemäßen Walzgerüstes ist das angetriebene Walzenpaar durch Zwischenwalzen eines Sexto-Gerüstes gebildet. Auch hier wird ein sehr vorteilhaftes Gerüst gebildet, wobei insbesondere der Wegfall von bedienseitigen Walzenverstelleinrichtungen vorteilhaft ist.

Die erfindungsgemäße Aufgabe wird weiters gemäß den Merkmalen des Anspruchs 17 durch die Verwendung eines Walzgerüstes nach Anspruch 1 gelöst.

Durch die Koppelung der Funktion des Drehantriebes und der einer axialen Betätigungseinrichtung in zumindest einer Antriebswelle eines Walzenpaares, kann die gesamte axiale Verschiebung durch den Antriebsstrang selbst aufgebracht werden. Es sind also keine zusätzlichen Stellsysteme erforderlich. Die axiale Verschiebung wird durch den beweglichen Wellenteil auch auf die Walze aufgebracht, welche über eine Kupplung mit dem beweglichen Wellenteil gekoppelt ist. Die Antriebswelle gleicht die axiale Verschiebung zwischen dem beweglichen und einem ortsfesten motorseitigen Wellenteil aus, wobei die Teile teleskopartig ineinander greifen. Der bewegliche Wellenteil wirkt als Aktuator für die axiale Walzenverschiebung. Durch die Verbindung der Funktionen Drehantrieb und axiale Walzenverschiebung lässt sich auch ein einfacheres Walzverfahren erzielen, weil Anpassungen der Walzsituation durch eine axiale Walzenverschiebung nicht durch Hydrauliksysteme, die sich gegenseitig beeinflussen und dabei zu Störungen führen können, gebildet werden. Aufgrund eines zentral angreifenden Aktuators ist eine optimale Krafteinleitung sichergestellt. Hinzukommt, dass bei konventionellen Verschiebevorrichtungen zumindest zwei Kolben-Zylinder-Einheiten je Walze nötig sind, wobei hier ein höherer Anlagen- und Steuerungsaufwand zur Synchronisierung der Verschiebungsbewegungen nötig ist. Auch ungewünschte Verkantungen zwischen den beiden Kolben-Zylinder-Einheiten sind bei dem erfindungsgemäßen Verfahren mit zentraler Krafteinleitung in die Antriebswelle bzw. die Walze nicht mehr zu erwarten.

Bei Regelung eines derartigen Walzgerüstes im Walzbetrieb ist somit ein einfacheres Regelverhalten zu erwarten.

Eine besonders vorteilhafte Ausgestaltung des erfindungsgemäßen Verfahrens wird dadurch erreicht, dass beide Walzen eines Walzenpaares axial verschoben werden, wobei die axialen Verschiebungen jeweils durch einen beweglichen Wellenteil bzw. dessen Kolben-Zylinder-Einheit aufgeprägt werden. Aufgrund der zusätzlichen axialen Verschiebung lassen sich die Walzprofile noch besser beeinflussen, wobei wiederum aufgrund der Anstellung direkt über den beweglichen Wellenteil ein sehr vorteilhaftes Anstellverhalten resultiert.

Eine weitere vorteilhafte Ausgestaltung des erfindungsgemäßen Verfahrens wird dadurch erzielt, dass der bewegliche Wellenteil mittels eines Aktuators die axiale Verschiebung geregelt aufprägt. Aufgrund des direkten Anstellverhaltens bei Betätigung des Aktuators zur Verschiebung des beweglichen Wellenteils ist es möglich ein optimales Regelverhalten zu erzielen, sodass ungewollte Änderungen am Walzprofil sehr rasch beseitigt werden können. Insbesondere in einem geschlossenen Regelkreis ist durch diese Walzenverschiebung ein sehr vorteilhaftes Regelverhalten erzielbar.

Gemäß einer weiteren vorteilhaften Ausgestaltung des erfindungsgemäßen Verfahrens erfolgt die axiale Verschiebung des beweglichen Wellenteils geregelt, auf Basis eines Modells und/oder gemessener Walzgrößen, insbesondere des Walzgutprofils. Die Kombination der geregelten Verschiebung mit modellierten oder gemessenen Größen lässt eine sehr rasche und genaue axiale Positionierung der Walzen zu, sodass sehr enge Walztoleranzen am Walzprodukt erzielbar sind.

Die Erfindung wird am anhand der folgenden Figuren beispielhaft und nicht einschränkend näher beschrieben.
Fig. 1 zeigt die erfindungsgemäße Antriebswelle und den Walzenzapfens in einer Schnittdarstellung parallel zur Wellenachse.
Fig. 2 zeigt einen Teil der erfindungsgemäßen Antriebswelle und der Schutzabdeckung mit Tragekonstruktion.
Fig. 3 zeigt die erfindungsgemäße Kupplung und den Wellenzapfen in einer Schnittdarstellung quer zur Kupplungsachse.
Fig. 4 zeigt die erfindungsgemäße Kupplung und den Wellenzapfen in einer Schnittdarstellung parallel zur Kupplungsachse.
Fig. 5 zeigt die erfindungsgemäße Kupplung und die Spindelkopfhalterung in einer Schnittdarstellung quer zur Kupplungsachse.

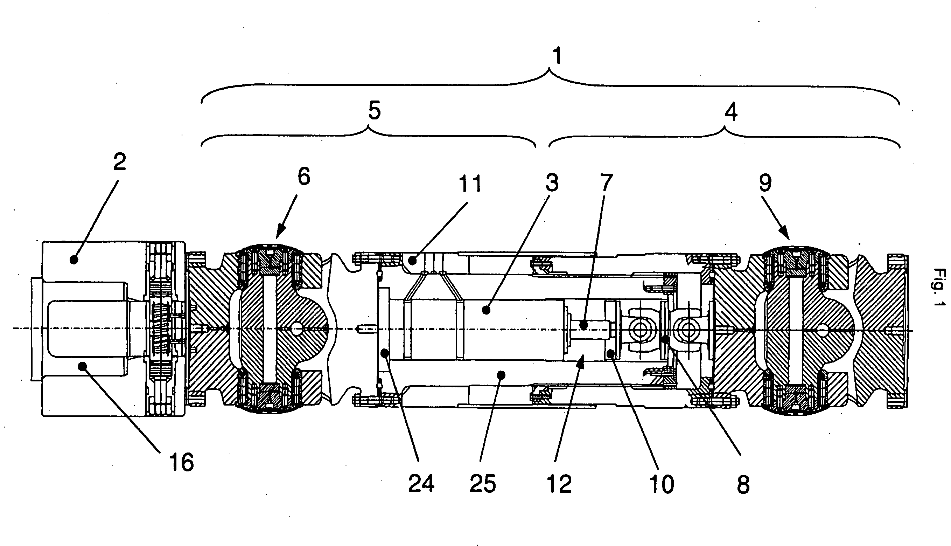

In Fig. 1 sind als Ausschnitt die Antriebswelle (1) mit den beiden Wellenteilen (4) und (5) dargestellt. Der Wellenteil (4) ist motorseitig und ortsfest angeordnet, während der Wellteil (5) in axialer Richtung beweglich angeordnet ist. Die Antriebswelle (1) dient dem Antrieb einer Walze, wobei Höhenverlagerungen und axiale Positionsänderungen entsprechend durch die Antriebswelle (1) ausgeglichen werden können. Die dargestellte Welle (1) weist zwei Gelenkköpfe (6, 9) auf. In einer Ausnehmung (12) ist eine Kolben-Zylinder-Einheit (3) zur axialen Verschiebung des beweglichen Wellenteils (5) angeordnet, wobei der Zylinder mittels eines Zylinderflansches (24) zwischen dem Gelenkkopf (6) und dem Antriebswellen-Innenteil (25) fixiert wird. Die Kolbenstange (7) wird mittels einer Führungsscheibe (10) in radialer Richtung im Antriebswellen-Innenteil (25) geführt. Die Kolbenstange (7) steht über die Führungsscheibe (10) und einem Verbindungsgelenk (8) in Verbindung mit dem Gelenkkopf (9), wobei nicht zu vermeidende Achsverlagerungen ausgeglichen und somit Schäden an der Kolben-Zylinder-Einheit (3) vermieden werden können. Die Kolben-Zylinder-Einheit (3) wird über eine nicht näher ausgeführte, an sich bekannte außen liegende Drehdurchführung (11) hydraulisch versorgt. Die Kupplung (2) dient der raschen und einfachen Kopplung der Walze über den Walzenzapfen (16) mit der Kupplung (2).

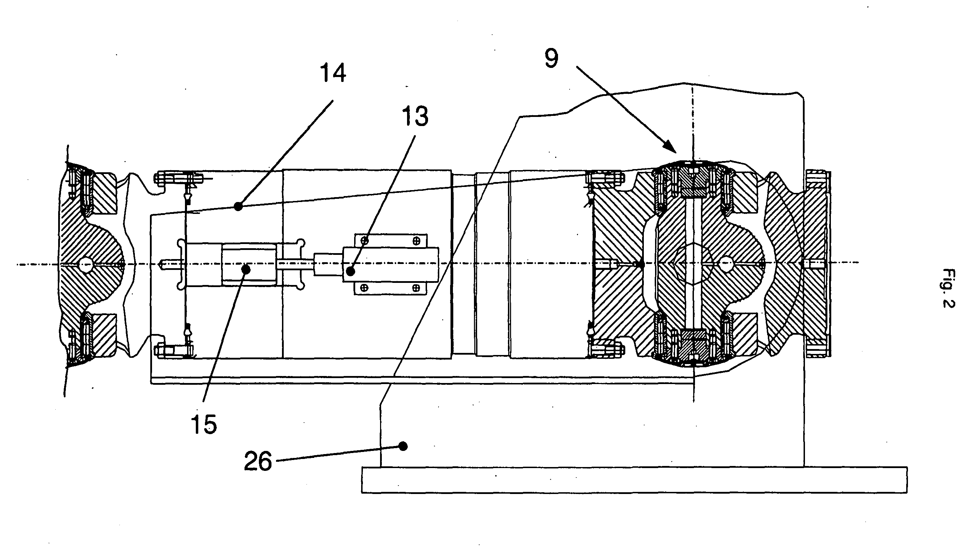

Fig. 2 zeigt einen Ausschnitt der Antriebswelle (1) und die Anordnung der Schutzabdeckung (14) an einer unteren Antriebswelle (1). Entsprechend ist auch eine Schutzabdeckung für eine obere Antriebswelle vorgesehen. Die Schutzabdeckung ist in einer ortsfesten Tragekonstruktion (26) beweglich gelagert. Außen auf der Schutzabdeckung (14) ist eine Wegmessung (13) vorgesehen, wobei diese in Verbindung mit der mitfahrenden Nase (15) der Drehmomentenabstützung für die Drehdurchführung (11) steht.

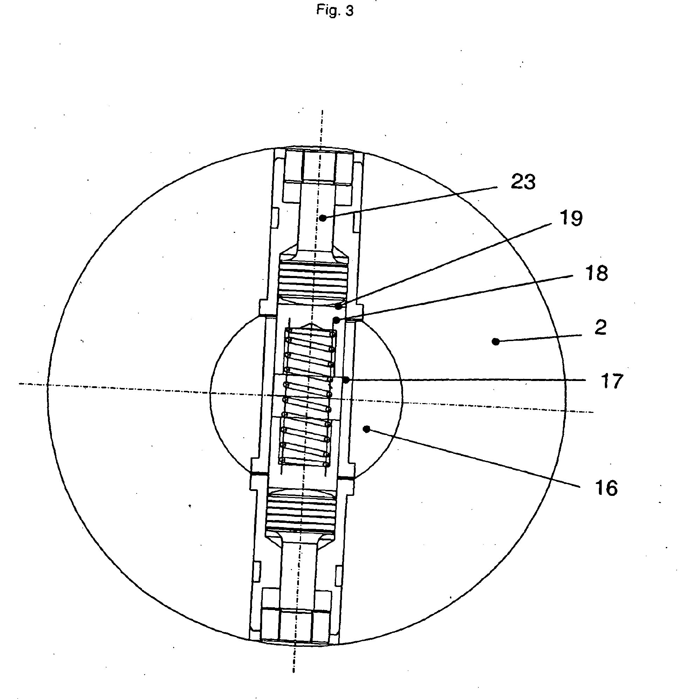

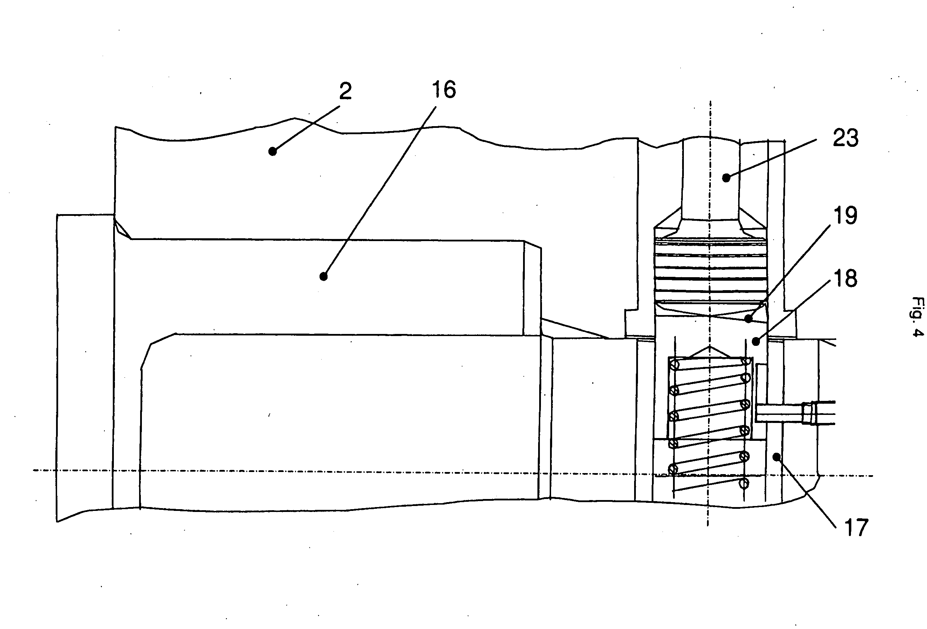

In Fig. 3 ist als Detail ein Schnitt quer zur Achse der Kupplung (2) dargestellt. Die Kupplung (2) weist Ausnehmungen auf, in denen die radial angeordneten Entriegelungskolben (23) beweglich gelagert sind. Diese Entriegelungskolben (23) dienen der Kraftübertragung auf die Druckstücke (18) und werden in Figur 4 näher ausgeführt. Der Wellenzapfen (16) weist zwei in einer Hülse (17) gelagerte Druckstücke (18) auf, wobei diese gegeneinander mittels einer Feder vorgespannt sind. Durch die Druckstücke (18) wird durch einen Formschluss die Verbindung zwischen der Kupplung (2) und dem Walzenzapfen (16) hergestellt. Zur Entkopplung werden die Druckstücke (18) gegen die Federkraft zusammengedrückt und somit die Kopplung gelöst.

Fig. 4 zeigt in einem Detailausschnitt die Kupplung (2) und die Druckstücke (18) in verriegeltem Zustand, also unter Formschluss zwischen der Kupplung (2) und dem Walzenzapfen (16). Die Kupplung (2) ist in Fig. 4 nicht vollständig dargestellt. Um ein selbsttätiges Verriegeln der Kupplung (2) mit dem Walzenzapfen (16) zu ermöglichen, weisen die über Federn vorgespannte Druckstücke (18) eine Schräge (19) auf, sodass beim Einfahren der Walze bzw. des Walzenzapfens (16) in die Kupplung (2) die Druckstücke (18) erst gegenüber der Kupplung (2) zusammengedrückt werden und dann selbsttätig durch die Feder einen Formschluss mit der Kupplung (2) herbeiführen.

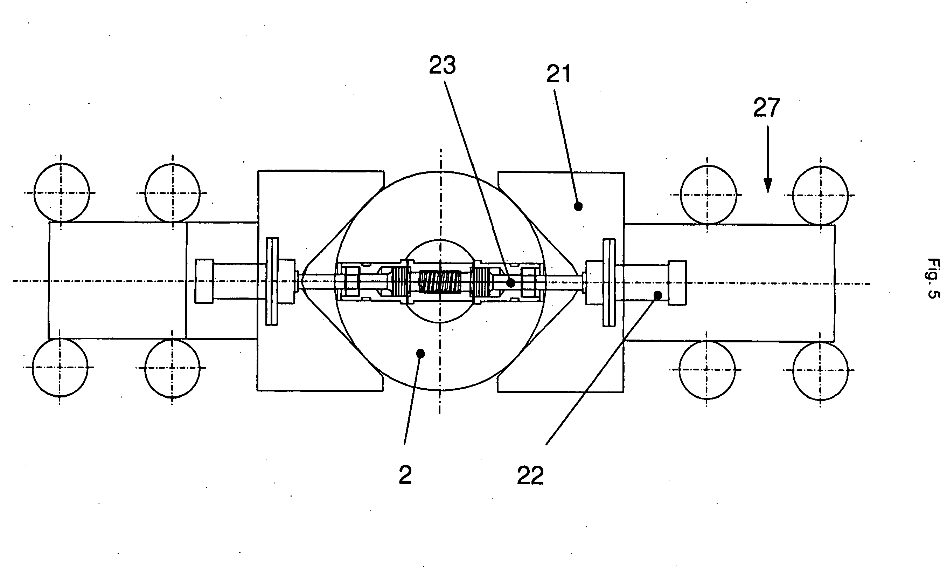

Fig. 5 zeigt die Spindelkopfhalterung (20) in eingefahrener Position, wobei die Kupplung (2) und die Welle (1) mittels der beiden Halteelemente (21) in Ihrer Lage fixiert wird, sodass diese auch nach abziehen der Walze aus der Kupplung beibehalten wird. Die Kopplung mit einer neuen Walze, z.B. nach einem Walzenwechsel wird dadurch ermöglicht. Die Spindelkopfhalterung (20) weist zwei Betätigungseinrichtungen (22) auf. Diese drücken über die Entriegelungskolben (23) auf die Druckstücke (18), wobei die Feder zusammengedrückt und damit der Walzenzapfen (16) entriegelt wird. Die Spindelkopfhalterung (20) weist eine Anstelleinrichtung (27) auf, sodass diese bei Normalbetrieb aus dem Antriebswellenbereich ausgefahren werden kann. Die Anstellung kann durch eine hydraulische oder auch elektromechanische Betätigung erfolgen.

## Patentansprüche

1. Walzgerüst mit zumindest einem, in einem Gerüstständer gelagerten, Walzenpaar und Antriebswellen (1), insbesondere Gelenkwellen, zum Drehantrieb der Walzen, und einer Kupplung (2) zur Kopplung der Antriebswellen (1) mit den Walzen, **dadurch gekennzeichnet, dass** zumindest eine der Antriebswellen (1) zumindest eine Betätigungseinrichtung (3), zur axialen Verschiebung, unter Änderung der axialen Länge der Antriebswelle (1), aufweist, wobei die Betätigungseinrichtung (3) als Kolben-Zylinder-Einheit (3) ausgebildet ist, welche in einer Ausnehmung (12) in der Antriebswelle (1) integriert ist, wobei die Achsen der Kolben-Zylinder-Einheit (3) und der Antriebswelle (1) zusammenfallen, und wobei die Walze über die Kupplung (2) mit der Antriebswelle (1) derart koppelbar ist, dass mittels der Betätigungseinrichtung (3) auch die Walze axial verschiebbar ist.

2. Walzgerüst nach Anspruch 1, **dadurch gekennzeichnet, dass** die Antriebswelle (1) motorseitig einen in axialer Richtung ortsfesten Wellenteil (4) und gerüstseitig einen in axialer Richtung verschieblichen Wellenteil (5) aufweist.

3. Walzgerüst nach Anspruch 1 oder 2, **dadurch gekennzeichnet, dass** die Kolben-Zylinder-Einheit (3) zylinderseitig fest mit dem Gelenkkopf (6) des verschiebbaren Wellenteils (5) verbunden ist.

4. Walzgerüst nach einem der Ansprüche 1 bis 3, **dadurch gekennzeichnet, dass** die Kolben-Zylinder-Einheit (3) kolbenseitig über eine Kolbenstange (7) gelenkig über ein Verbindungsgelenk (8) mit dem Gelenkkopf (9) des ortsfesten Wellenteils (4) verbunden ist.

5. Walzgerüst nach einem der Ansprüche 2 bis 4, **dadurch gekennzeichnet, dass** zur radialen Führung der Kolbenstange (7) der Kolben-Zylinder-Einheit (3) eine Führungsscheibe (10) vorgesehen ist, welche mit der Kolbenstange (7) und dem Verbindungsgelenk (8) fest verbindbar ist.

6. Walzgerüst nach einem der Ansprüche 2 bis 5, **dadurch gekennzeichnet, dass** die beiden Teile der Antriebswelle (4, 5) in axialer Richtung teleskopartig ineinander greifen.

7. Walzgerüst nach einem der Ansprüche 2 bis 6, **dadurch gekennzeichnet, dass** der bewegliche Wellenteil (5) eine außen liegende Drehdurchführung (11) zur hydraulischen Versorgung der Kolben-Zylinder-Einheit (3) aufweist.

8. Walzgerüst nach einem der Ansprüche 2 bis 7, **dadurch gekennzeichnet, dass** ein außen liegendes Wegmesssystem (13), zur Erfassung der axialen Position des verschieblichen Wellenteils (5), an der Antriebswelle (1) vorgesehen ist, wobei dieses zwischen einer Schutzabdeckung (14) und einer mitfahrenden Nase (15) zur Drehmomentenabstützung für die Drehdurchführung (11) angeordnet ist.

9. Walzgerüst nach einem der Ansprüche 1 bis 8, **dadurch gekennzeichnet, dass** die Walze einen Walzenzapfen (16) aufweist, der zwei in einer Hülse (17) geführte und federbelastete Druckstücke (18), zur formschlüssigen Kopplung des Walzenzapfens (16) mit der Kupplung (2) umfasst.

10. Walzgerüst nach einem der Ansprüche 1 bis 8, **dadurch gekennzeichnet, dass** die Walze mittels der federbelasteten und in Ausnehmungen der Kupplung (2) selbsttätig einrastenden Druckstücken (18) mit dem axial verschieblichen Wellenteil (5) koppelbar ist.

11. Walzgerüst nach Anspruch 10, **dadurch gekennzeichnet, dass** die äußeren Stirnseiten (19) der Druckstücke (13), zur selbsttätigen Verriegelung abgeschrägt sind, wobei die Schräge gelenkwellenseitig und geneigt zur Kupplungsachse angeordnet ist.

12. Walzgerüst nach einem der Ansprüche 9 oder 11, **dadurch gekennzeichnet, dass** zumindest eine seitlich anstellbare Spindelkopfhalterung (20) mit Halteelementen (21) zur Lagefixierung der Antriebswelle (1, 4, 5) vorgesehen ist, wobei die Spindelkopfhalterung (20) zwei Betätigungseinrichtungen (22) zum Verschieben der Druckstücke (18) zum Lösen der Verbindung zwischen Walze und axial verschieblichem Wellenteil (5) aufweist.

13. Walzgerüst nach einem der Ansprüche 10 oder 11, **dadurch gekennzeichnet, dass** in der Kupplung (2) radial angeordnete Entriegelungskolben (23), zur Übertragung der Kraft der Betätigungseinrichtungen (22) auf die Druckstücke (18), vorgesehen sind.

14. Walzgerüst nach einem der obigen Ansprüche, **dadurch gekennzeichnet, dass** die Walzen mittels Einbaustücken im Gerüstständer gelagert sind, wobei diese gemeinsam mit der Walze axial verschiebbar sind.

15. Walzgerüst nach einem der Ansprüche 1 bis 14, **dadurch gekennzeichnet, dass** das angetriebene Walzenpaar durch Arbeitswalzen eines Quarto-Gerilstes gebildet ist.

16. Walzgerüst nach einem der Ansprüche 1 bis 14, **dadurch gekennzeichnet, dass** das angetriebene Walzenpaar durch Zwischenwalzen eines Sexto-Gerüstes gebildet ist.

17. Verwendung des Walzgerüstes nach Anspruch 1 zum axialen Verschieben von zumindest einer Walze eines über Antriebswellen drehangetriebenen Walzenpaares, welche mittels Einbaustücken in einem Gerüstständer gelagert sind, wobei die axiale Verschiebung der Walze zusammen mit den Einbaustücken erfolgt, **dadurch gekennzeichnet, dass** die axiale Verschiebung der Walze, welche über eine Kupplung mit einem beweglichen Wellenteil der Antriebswelle gekoppelt ist, durch eine axiale Verschiebung des beweglichen Wellenteils erfolgt, wobei der bewegliche Wellenteil und ein ortsfester Wellenteil die gesamte axiale Verschiebung aufnehmen, und wobei die axiale Verschiebung durch den beweglichen Wellenteil selbst aufgeprägt wird.

18. Verwendung des Walzgerüstes nach Anspruch 17, **dadurch gekennzeichnet, dass** beide Walzen eines Walzenpaares axial verschoben werden, wobei die axialen Verschiebungen jeweils durch einen beweglichen Wellenteil aufgeprägt werden.

19. Verwendung des Walzgerüstes nach einem der Ansprüche 17 oder 18, **dadurch gekennzeichnet, dass** der bewegliche Wellenteil mittels eines Aktuators die axiale Verschiebung geregelt aufprägt.

20. Verwendung des Walzgerüstes nach einem der Ansprüche 17 bis 19, **dadurch gekennzeichnet, dass** die axiale Verschiebung des beweglichen Wellenteils geregelt auf Basis eines Modells und/oder gemessener Walzgrößen, insbesondere des Walzgutprofils, erfolgt.

## Claims

1. Roll stand with at least one pair of rolls mounted in a stand column and drive shafts (1), particularly cardan shafts, for the rotary drive of the rolls, and with a coupling (2) for coupling the drive shafts (1) to the rolls, **characterized in that** at least one of the drive shafts (1) has at least one actuating arrangement (3) for axial displacement, with a change in the axial length of the drive shaft (1), the actuating arrangement (3) being designed as a piston/cylinder unit (3) which is integrated in a recess (12) in the drive shaft (1), the axes of the piston/cylinder unit (3) and of the drive shaft (1) coinciding, and the roll being capable of being coupled to the drive shaft (1) via the coupling (2) in such a way that the roll can also be displaced axially by means of the actuating arrangement (3).

2. Roll stand according to Claim 1, **characterized in that** the drive shaft (1) has, on the motor side, a shaft part (4) fixed in the axial direction and, on the stand side, a shaft part (5) displaceable in the axial direction.

3. Roll stand according to Claim 1 or 2, **characterized in that** the piston/cylinder unit (3) is connected fixedly, on the cylinder side, to the joint head (6) of the displaceable shaft part (5).

4. Roll stand according to one of Claims 1 to 3, **characterized in that** the piston/cylinder unit (3) is connected, on the piston side, via the piston rod (7) to the joint head (9) of the fixed shaft part (4) in an articulated manner via a connecting joint (8).

5. Roll stand according to one of Claims 2 to 4, **characterized in that,** for the radial guidance of the piston rod (7) of the piston/cylinder unit (3), a guide disk (10) is provided which can be connected fixedly to the piston rod (7) and to the connecting joint (8).

6. Roll stand according to one of Claims 2 to 5, **characterized in that** the two parts of the drive shaft (4, 5) engage telescopically one in the other in the axial direction.

7. Roll stand according to one of Claims 2 to 6, **characterized in that** the movable shaft part (5) has an external rotary leadthrough (11) for the hydraulic supply of the piston/cylinder unit (3).

8. Roll stand according to one of Claims 2 to 7, **characterized in that** an external path measurement system (13) for detecting the axial position of the displaceable shaft part (5) is provided on the drive shaft (1), this path measurement system being arranged between a protective cover (14) and an accompanying nose (15) for torque support for the rotary leadthrough (11).

9. Roll stand according to one of Claims 1 to 8, **characterized in that** the roll has a roll journal (16) which comprises two thrust pieces (18), guided in a sleeve (17) and spring-loaded, for the positive coupling of the roll journal (16) to the coupling (2).

10. Roll stand according to one of Claims 1 to 8, **characterized in that** the roll can be coupled to the axially displaceable shaft part (5) by means of the spring-loaded thrust pieces (18) latching automatically in recesses of the coupling (2).

11. Roll stand according to Claim 10, **characterized in that** the outer end faces (19) of the thrust pieces (13) are sloped for automatic locking, the slope being arranged on the cardan shaft side and at an inclination to the coupling axis.

12. Roll stand according to either one of Claims 9 and 11, **characterized in that** at least one laterally adjustable spindle head mounting (20) with holding elements (21) for fixing the drive shaft (1, 4, 5) in position is provided, the spindle head mounting (20) having two actuating arrangements (22) for the displacement of the thrust pieces (18) in order to release the connection between the roll and the axially displaceable shaft part (5).

13. Roll stand according to either one of Claims 10 and 11, **characterized in that** radially arranged unlocking pistons (23) for transmitting the force of the actuating arrangements (22) to the thrust pieces (18) are provided in the coupling (2).

14. Roll stand according to one of the above claims, **characterized in that** the rolls are mounted in the stand column by means of installation pieces, the latter being displaceable axially together with the roll.

15. Roll stand according to one of Claims 1 to 14, **characterized in that** the driven pair of rolls is formed by working rolls of a four-high stand.

16. Roll stand according to one of Claims 1 to 14, **characterized in that** the driven pair of rolls is formed by intermediate rolls of a six-high stand.

17. Use of the roll stand according to Claim 1 for the axial displacement of at least one roll of a pair of rolls which are driven in rotation via drive shafts and which are mounted in a stand column by means of installation pieces, the axial displacement of the roll taking place together with the installation pieces, **characterized in that** the axial displacement of the roll which is coupled to a movable shaft part of the drive shaft via a coupling takes place by means of an axial displacement of the movable shaft part, the movable shaft part and a fixed shaft part receiving the overall axial displacement, and the axial displacement being imparted by the movable shaft part itself.

18. Use of roll stand according to Claim 17, **characterized in that** both rolls of a pair of rolls are displaced axially, the axial displacements in each case being imparted by a movable shaft part.

19. Use of roll stand according to either one of Claims 17 and 18, **characterized in that** the movable shaft part imparts the axial displacement in an automatically controlled manner by means of an actuator.

20. Use of roll stand according to one of Claims 17 to 19, **characterized in that** the axial displacement of the movable shaft part takes place in an automatically controlled manner on the basis of a model and/or of measured rolling variables, in particular of the rolling stock profile.

## Revendications

1. Cage de laminoir avec au moins une paire de cylindres, supportée dans un bâti de cage, et des arbres d'entraînement (1), en particulier des arbres articulés, pour l'entraînement en rotation des cylindres, et un accouplement (2) pour l'accouplement des arbres d'entraînement (1) avec les cylindres, **caractérisée en ce qu'**au moins un des arbres d'entraînement (1) présente au moins un dispositif d'actionnement (3), pour le déplacement axial par modification de la longueur axiale de l'arbre d'entraînement (1), dans laquelle le dispositif d'actionnement (3) se présente sous la forme d'une unité à piston-cylindre (3) qui est intégrée dans un évidement (12) dans l'arbre d'entraînement (1), dans laquelle les axes de l'unité à piston-cylindre (3) et de l'arbre d'entraînement (1) coïncident, et dans laquelle le cylindre peut être accouplé à l'arbre d'entraînement (1) au moyen de l'accouplement (2), de telle manière que le cylindre soit également déplaçable axialement au moyen du dispositif d'actionnement (3).

2. Cage de laminoir selon la revendication 1, **caractérisée en ce que** l'arbre d'entraînement (1) présente côté moteur une partie d'arbre (4) fixe en direction axiale et côté cage une partie d'arbre (5) déplaçable en direction axiale.

3. Cage de laminoir selon la revendication 1 ou 2, **caractérisée en ce que** l'unité à piston-cylindre (3) est solidarisée côté cylindre avec la tête articulée (6) de la partie d'arbre déplaçable (5).

4. Cage de laminoir selon l'une quelconque des revendications 1 à 3, **caractérisée en ce que** l'unité à piston-cylindre (3) est reliée côté piston par une tige de piston (7) de façon articulée par une articulation de liaison (8) à la tête articulée (9) de la partie d'arbre fixe (4).

5. Cage de laminoir selon l'une quelconque des revendications 2 à 4, **caractérisée en ce qu'**il est prévu, pour le guidage radial de la tige de piston (7) de l'unité à piston-cylindre (3), un disque de guidage (10), qui peut être solidarisé avec la tige de piston (7) et avec l'articulation de liaison (8).

6. Cage de laminoir selon l'une quelconque des revendications 2 à 5, **caractérisée en ce que** les deux parties de l'arbre d'entraînement (4, 5) s'engagent l'une dans l'autre de façon télescopique en direction axiale.

7. Cage de laminoir selon l'une quelconque des revendications 2 à 6, **caractérisée en ce que** la partie d'arbre mobile (5) présente un passage rotatif situé à l'extérieur (11) pour l'alimentation hydraulique de l'unité à piston-cylindre (3).

8. Cage de laminoir selon l'une quelconque des revendications 2 à 7, **caractérisée en ce qu'**il est prévu sur l'arbre d'entraînement (1) un système de mesure de course (13) situé à l'extérieur, pour la détection de la position axiale de la partie d'arbre déplaçable (5), dans laquelle celui-ci est disposé entre un couvercle de protection (14) et un ergot entraîné (15) pour l'appui du couple de rotation pour le passage rotatif (11).

9. Cage de laminoir selon l'une quelconque des revendications 1 à 8, **caractérisée en ce que** le cylindre présente un tourillon de cylindre (16), qui comprend deux pièces de pression (18) guidées dans une douille (17) et chargées par un ressort, en vue de l'accouplement par complémentarité de forme du tourillon d'arbre (16) avec l'accouplement (2).

10. Cage de laminoir selon l'une quelconque des revendications 1 à 8, **caractérisée en ce que** le cylindre peut être accouplé à la partie d'arbre déplaçable (5) au moyen des pièces de pression (18) chargées par un ressort et s'engageant automatiquement dans des évidements de l'accouplement (2).

11. Cage de laminoir selon la revendication 10, **caractérisée en ce que** les faces frontales extérieures (19) des pièces de pression (18) sont inclinées en vue de leur verrouillage automatique, dans laquelle la pente est disposée côté articulation et inclinée vers l'axe de l'accouplement.

12. Cage de laminoir selon l'une quelconque des revendications 9 ou 11, **caractérisée en ce qu'**il est prévu au moins un support de tête de broche (20) réglable latéralement avec des éléments de support (21) pour fixer la position de l'arbre d'entraînement (1, 4, 5), dans laquelle le support de tête de broche (20) présente deux dispositifs d'actionnement (22) pour le déplacement des pièces de pression (18) en vue de libérer la liaison entre le cylindre et la partie d'arbre déplaçable axialement (5).

13. Cage de laminoir selon l'une quelconque des revendications 10 ou 11, **caractérisée en ce qu'**il est prévu des pistons de déverrouillage (23) disposés radialement dans l'accouplement (2), pour la transmission de l'effort des dispositifs d'actionnement (22) aux pièces de pression (18).

14. Cage de laminoir selon l'une quelconque des revendications précédentes, **caractérisée en ce que** les cylindres sont supportés dans le bâti de cage au moyen de pièces rapportées, dans laquelle celles-ci sont déplaçables axialement en même temps que le cylindre.

15. Cage de laminoir selon l'une quelconque des revendications 1 à 14, **caractérisée en ce que** la paire de cylindres entraînés est formée par les cylindres de travail d'une cage quarto.

16. Cage de laminoir selon l'une quelconque des revendications 1 à 14, **caractérisée en ce que** la paire de cylindres entraînés est formée par des cylindres intermédiaires d'une cage sexto.

17. Utilisation de la cage de laminoir selon la revendication 1 pour le déplacement axial d'au moins un cylindre d'une paire de cylindres entraînés en rotation par des arbres d'entraînement, et qui sont supportés dans un bâti de cage au moyen de pièces rapportées, dans laquelle le déplacement axial du cylindre est effectué en même temps avec les pièces rapportées, **caractérisée en ce que** le déplacement axial du cylindre, qui est accouplé au moyen d'un accouplement à la partie d'arbre mobile de l'arbre d'entraînement, est effectué par un déplacement axial de la partie d'arbre mobile, dans laquelle la partie d'arbre mobile et une partie d'arbre fixe reprennent le déplacement axial total, dans laquelle le déplacement axial est assuré par la partie d'arbre mobile elle-même.

18. Utilisation de la cage de laminoir selon la revendication 17, **caractérisée en ce que** les deux cylindres d'une paire de cylindres sont déplacés axialement, dans laquelle les déplacement axiaux sont assurés chacun par une partie d'arbre mobile.

19. Utilisation de la cage de laminoir selon l'une quelconque des revendications 17 ou 18, **caractérisée en ce que** la partie d'arbre mobile assure le déplacement axial régulé au moyen d'un actionneur.

20. Utilisation de la cage de laminoir selon l'une quelconque des revendications 17 à 19, **caractérisée en ce que** le déplacement axial de la partie d'arbre mobile est effectué de façon régulée sur la base d'un modèle et/ou de grandeurs de laminage mesurées, en particulier du profil du produit laminé.
